Europäisches Patentamt

European Patent Office

Office européen des brevets

(11) Publication number: **0 038 658**
**B1**

# (12) EUROPEAN PATENT SPECIFICATION

(45) Date of publication of patent specification: **02.01.86**

(21) Application number: **81301610.2**

(22) Date of filing: **13.04.81**

(51) Int. Cl.⁴: **B 23 H 1/00**

(54) **Wire-cut electric discharge machining.**

(30) Priority: **16.04.80 JP 49941/80**

(43) Date of publication of application:
**28.10.81 Bulletin 81/43**

(45) Publication of the grant of the patent:
**02.01.86 Bulletin 86/01**

(84) Designated Contracting States:
**CH DE FR GB LI**

(56) References cited:
**FR-A-2 371 267**
**GB-A-2 015 780**

**PATENTS ABSTRACTS OF JAPAN, vol. 3, no.
62, 29th May 1979, page 162M60;**

**The file contains technical information
submitted after the application was filed and
not included in this specification**

(73) Proprietor: **FANUC LTD**
**3580, Shibokusa Aza-Komanba Oshino-mura
Minamitsuru-gun Yamanashi 401-05 (JP)**

(72) Inventor: **Obara, Haruki
No. 844-7, Hashimoto
Sagamihara-shi Kanagawa, 229 (JP)**

(74) Representative: **Billington, Lawrence Emlyn
et al
HASELTINE LAKE & CO Hazlitt House 28
Southampton Buildings Chancery Lane
London WC2A 1AT (GB)**

Courier Press, Leamington Spa, England.

# Description

The present invention relates to a wire-cut, electric discharge machining method and machine.

In wire-cut, electric discharge machining which machines a work by producing a discharge between a wire electrode and a work, it is necessary that the center of the wire electrode be disposed at a position offset from a desired contour of the work by a distance corresponding to the sum of one half of the wire diameter and the spark gap. Since the spark gap varies in size with voltage and current for the machining and the material and thickness of the work, however, the desired offset value changes for each machining operation and undergoes a change during each operation, too. To cope with this, it is the general practice of the prior art to predetermine the offset value of each portion of the work by performing test machining prior to main machining, but the operation therefor is very troublesome.

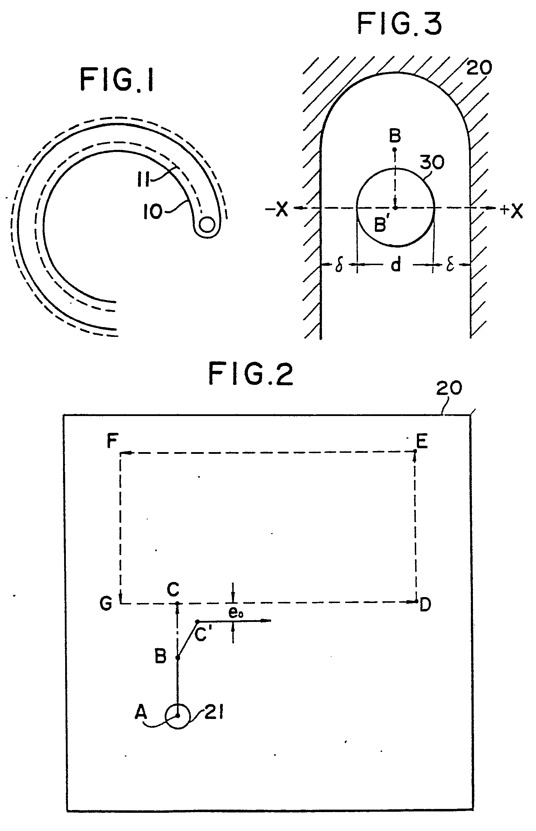

For example, when cutting a circular arc shape by wire-cut, electric discharge machining, the radius of curvature of an actually machined shape 10 becomes smaller than that of an intended configuration 11, as shown in Fig. 1. It is said that such an error is caused by a delay in the machining path due to sagging of the wire electrode under the pressure of discharge in the dielectric fluid, or by a difference in the quantity of machining between two side walls of the work because of their different radii of curvature; but the precise cause has not been cleared up yet. In order to avoid such a configuration error, some prior art adopts a method of precorrecting the machining path at the stage of preparing an NC tape, but this method is defective in that much time is required for the correction and that when the work or machining condition is changed, the quantity of correction must also be altered.

GB—A—2 015 780 discloses a method and machine in which the wire electrode deflection from a rest position is measured during machining, whereby the wire electrode can remain positioned on a prescribed machining path. This is achieved by detecting the wire deflection, during machining, by means of at least one displacement pickup system, and continuously correcting accordingly the feed path of the wire electrode relative to the workpiece. The displacement pickup system is preferably located around the wire electrode.

JP—A—5 439 298 discloses a method and machine in which a desired closed contour is cut from a workpiece. In a pre-machining step the wire electrode is moved from the center of the hole in an example workpiece cut accurately with the material inside the contour removed. The wire electrode is moved in this manner in all directions up to the point where the wire electrode contacts the limit of the contour in each case. The directional components of the positions at which the electrode is thus in contact with the workpiece are detected, and subsequently a blank workpiece is machined using such offset amounts of the wire electrode in every machining direction that are required to obtain the desired contour, the offset amounts being obtained based on the detected values and also on basic values which command the movement of the electrode or workpiece.

It is an object of the present invention to provide a wire-cut, electric discharge machining method and machine which are capable of measuring a required offset value during machining and which may permit accurate machining of, for example, a circular art shape by correcting the machining path in accordance with the measured offset value.

According to one aspect of the present invention there is provided a wire-cut, electric discharge machining method wherein the feed of a wire electrode and a discharge for machining are stopped during machining material which is to form a work; the wire electrode is moved in the machined gap in a direction perpendicular to the machining path until it gets into contact with a wall of the material, and the size of a spark gap is detected from the position of contact of the wire electrode with the wall of the material; a desired offset value is calculated from the detected size of the spark gap and the preknown wire diameter; and the path of machining the work is corrected so that the center of the wire electride may lie at a position offset by the desired offset value relative to a desired profile of the work.

According to another aspect of the present invention there is provided a wire-cut, electric discharge machine adapted and arranged to operate ·in accordance with a wire-cut, electric discharge machining method wherein the feed of a wire electrode and a discharge for machining are stopped during machining a material which is to form a work; the wire electrode is moved in the machined gap in a direction perpendicular to the machining path until it gets into contact with a wall of the material, and the size of a spark gap is detected from the position of contact of the wire · electrode with the wall of the material; a desired offset value is calculated from the detected size of the spark gap and the preknown wire diameter; and the path of machining the work is corrected automatically so that the center of the wire electrode may lie at a position offset by the desired offset value relative to a desired profile of the work. For a better understanding of the invention and to show how it may be put into effect reference will now be made, by way of example, to the accompanying drawings in which:

Fig. 1 is a schematic diagram explanatory of an error occurring in the machining of a circular arc portion;

Figs. 2 and 3 are schematic diagrams explanatory of an embodiment of the present invention; and

Figs. 4 and 5 are schematic diagrams explanatory of another embodiment of the present invention.

Figs. 2 and 3 are explanatory of an embodiment of the present invention, in which a required offset value is automatically measured in a premachining path where the operation proceeds to the machining of a desired shape and then the main machining is performed in accordance with the measured offset value. In Figs. 2 and 3, reference numeral 20 indictes a work; 21 designates a machining start hole, A identifies a machining start point; B denotes an offset measuring position- C to G represent the machining path; C' shows an offset end position; $e_0$ refers to a reference offset value; 30 indicates a wire electrode; d designates a wire diameter; δ identifies the size of the spark gap; and +X and −X denote directions in which the wire electrode 30 is moved for the detection of the offset.

In Fig. 2, assuming that a move command applied from the command tape to the numerical control unit is [A→B→C→D→E→F→G→C] and that the portion surrounded by the machining path D to G is the work 20, it is machined first from the point A to B without offset and, at the point B spaced a predetermined distance (for example ½AC) apart from the point A, the feed of the wire electrode 30 and the discharge are stopped. In this state, since the wire electrode 30 is free from sagging by the pressure of the discharge, a short is likely to occur between the wire electrode 30 and the work 20; therefore, it is desirable to move back the wire electrode 30 from the point B to B′ as shown in Fig. 3. The distance between the points B and B′ is selected to be, for example, about 0.1 mm.

Next, the wire electrode 30 is moved perpendicularly to the machining path A→C until it gets into contact with the wall surface of the work 20 and, from the position of contact therewith, the size δ of the spark gap is detected. The detection of the contact between the wire electrode 30 and the work 20 is achieved using, for example, a contact sensor circuit of the type applying a voltage across the wire electrode 30 and the work 20. Then, a required offset value e is calculated from the preknown wire diameter d and the measured size δ of the spark gap using the following expression:

$$e = \frac{d}{2} + \delta \qquad (1)$$

It is desirable that the detection of the required offset value be repeated a plurality of times to obtain an average. In the aforementioned backward movement of the wire electrode 30, a distance ε from the machining stop point to the point where the short between the wire electrode 30 and the work 20 is removed is measured and stored in an NC memory. Next, the offset value obtained by the above calculation is stored as the reference offset value $e_0$ in an internal memory and the machining is resumed gradually increasing the offset value so that the center of the wire electrode 30 may lie at the position offset by the reference offset value $e_0$ relative to the profile desired to obtain, thus correcting the machining path to B→C′.

As described above, according to this embodiment, the desired offset value is automatically detected in the premachining path where the operation proceeds to the machining of a desired shape and then the main machining is carried out in accordance with the detected offset value; accordingly, there is no need of predetermining the offset value; whereby to permit easier operation of the wire-cut, electric discharge machine than in the past.

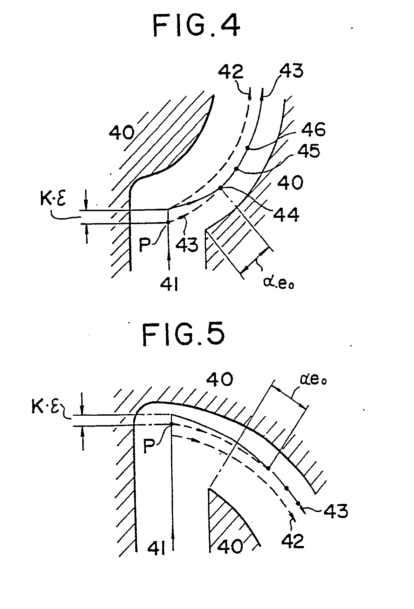

Fig. 4 is a schematic diagram explanatory of another embodiment of the present invention. In Fig. 4, reference numeral 40 indicates a work; 41 designates a premachining path; 42 identifies a reference offset path; 43 denotes a corrected offset path; and 44 to 46 represent offset decision positions.

When machining a circular arc shape on the basis of the reference offset value $e_0$ obtained in the premachining path, the radius of the resulting circular arc decreases to cause an error. In general, this error λ is a function of the radius r of the circular arc and the amount of sagging ε of the wire electrode and it is approximately given by the following expression:

$$\lambda = a \frac{\varepsilon_0 + b^m}{r^n} \qquad (2)$$

where a, b, m, n and $\varepsilon_0$ are constants. The error λ can substantially be corrected by calculating the value of the error λ in the numerical control unit or reading out the value λ entered in the numerical control unit or the like when programming the machining path and by following the corrected offset path 43 so that its radius of curvature may become larger than that of the reference offset path 42, for example, as shown in Fig. 4.

In the case where the accuracy of the expression (2) is low, however, the error λ cannot satisfactorily be corrected. This embodiment is intended to provide a method which is effective in such a case. Namely, where the wire electrode shifts to a circular arc machining from the premachining along the straight or curved path 41, an overcut takes place by k · ε at the intersection P of the premachining path 41 and the corrected offset path 43 and the wire electrode returns to the corrected offset path 43 after travelling a distance α · $e_0$, as depicted in Fig. 4. Here, ε is the amount of sag of the wire electrode; $e_0$ is the aforementioned offset value; and K and α are constants. The value of the constant K is between 0 to 1, preferably about 0.5 to 0.8 in the case of the portion inside the circular arc being the product and about 0.2 to 0.5 in the case of the portion outside the circular arc being the product. It is preferred that the value of the constant α be

approximately 1 to 2. The amount of sag $\varepsilon$ of the wire electrode can be detected by moving back the wire electrode during the machining and by deciding where the short between the wire electrode and the work has been removed. Such detection can be effected simultaneously with the measurement of the required offset value e in Fig. 3.

When the wire electrode has returned to the corrected offset path 43, a required offset value is automatically measured at that point by the same method as used in the foregoing embodiment, thereby determining a new required offset value. And the machining path is corrected to have the required offset value at a point spaced from the abovesaid point a very small distance, for example, a distance substantially corresponding to the offset value, and then a required offset value at that point is detected; thereafter such detection is repeated a plurality of times. When the detected offset values have fallen within a certain range, a final offset value is determined and this circular arc portion is machined following the final offset value thus obtained.

With such a method described above, since the offset value is automatically corrected to perform machining in a desired shape, a circular arc shape and the like can accurately be machined without involving cumbersome operations. This method is similarly applicable to the case where the premachining path 41 is followed by a circular arc portion at an acute angle as depicted in Fig. 5.

As has been described in the foregoing, according to the present invention, the feed of the wire electrode and the discharge are stopped during machining; the wire electrode is moved perpendicularly to the machining path until it comes into contact with the wall of the work and the size of the spark gap is detected from the position where the wire electrode is in contact with the work; a desired offset value is calculated from the size of the spark gap thus detected and the preknown wire diameter; and the machining path is corrected so that the center of the wire electrode may lie at a position offset by the offset value relative to a profile desired to obtain. Since the required offset value need not be predetermined, operability of the wire-cut, electric discharge machine used is enhanced and the machining accuracy of a circular arc portion is raised, too.

It will be apparent that many modifications and variations may be effected without departing from the scope of this invention, as defined by the attached claims.

## Claims

1. A wire-cut, electric discharge machining method wherein the feed of a wire electrode and a discharge for machining are stopped during machining material which is to form a work; the wire electrode is moved in the machined gap in a direction perpendicular to the machining path until it gets into contact with a wall of the material, and the size of a spark gap is detected from the position of contact of the wire electrode with the wall of the material; a desired offset value is calculated from the detected size of the spark gap and the preknown wire diameter; and the path of machining the work is corrected so that the center of the wire electrode may lie at a position offset by the desired offset value relative to a desired profile of the work.

2. A method according to claim 1, wherein a calculation as aforesaid of a desired offset value takes place in a premachining path prior to machining the desired profile of the work itself.

3. A method according to claim 1 or 2, wherein a desired profile of the work has a radius of curvature and a calculation as aforesaid of a desired offset value takes place whilst machining the radiused profile.

4. A method according to any one of the preceding claims, wherein the or each said calculation is repeated a plurality of times to provide a final offset value.

5. A wire-cut, electric discharge machine adapted and arranged to operate in accordance with a wire-cut, electric discharge machining method wherein the feed of a wire electrode and a discharge for machining are stopped during machining a material which is to form a work; the wire electrode is moved in the machined gap in a direction perpendicular to the machining path until it gets into contact with a wall of the material, and the size of a spark gap is detected from the position of contact of the wire electrode with the wall of the material; a desired offset value is calculated from the detected size of the spark gap and the preknown wire diameter; and the path of machining the work is corrected automatically so that the center of the wire electrode may lie at a position offset by the desired offset value relative to a desired profile of the work.

6. A machine according to claim 5, wherein a calculation as aforesaid of a desired offset value takes place in a premachining path prior to machining the desired profile of the work itself.

7. A machine according to claim 5 or 6, wherein a desired profile of the work has a radius of curvature and a calculation as aforesaid of a desired offset value takes place automatically whilst machining the radiused profile.

8. A machine according to any one of the preceding claims 5 to 7, wherein said calculation is repeated a plurality of times to provide a final offset value.

## Patentansprüche

1. Schneiddraht-Bearbeitungsverfahren mittels elektrischer Entladung, bei dem der Vorschub einer Drahtelektrode und die Entladung zum Bearbeiten während der Bearbeitung eines Materials, das zu einem Werkstück auszubilden ist, gestoppt werden, bei dem die Drahtelektrode in einem durch die Bearbeitung erzeugten Spalt in einer Richtung senkrecht zu dem Bearbeitungsweg bewegt wird, bis sie in Berührung mit einer Wandung des Materials kommt, und bei dem die Länge einer Funkenstrecke aus der Position der Berührung der Drahtelektrode mit der Wandung des Materials erfaßt wird, wobei ein Sollversetzungswert aus der erfaßten Länge der Funkenstrecke und dem vorbekannten Drahtdurchmesser berechnet wird und wobei der Bearbeitungsweg korrigiert wird, so daß das Zentrum der Drahtelektrode bei einer Position liegen kann, die um den Sollversetzungswert relativ zu einem Sollprofil des Werkstücks versetzt ist.

2. Verfahren nach Anspruch 1, bei dem eine Berechnung des Sollversetzungswertes wie obengenannt in einem Vorbearbeitungsweg vor dem eigentlichen Herausarbeiten des Sollprofils des Werkstücks stattfindet.

3. Verfahren nach Anspruch 1 oder 2, bei dem das Sollprofil des Werkstücks einen Krümmungsradius hat und eine Berechnung eines Sollversetzungswertes wie obengenannte während des Herausarbeitens des abgerundeten Profils stattfindet.

4. Verfahren nach einem der vorhergehenden Ansprüche, bei dem die oder jede Berechnung mehrmals wiederholt wird, um einen endgültigen Versetzungswert zu bestimmen.

5. Schneiddraht-Elektroerosionsmaschine, die dazu bestimmt und derart beschaffen ist, daß sie in Übereinstimmung mit einem Schneiddraht-Bearbeitungsverfahren mittels elektrischer Entladung arbeitet, bei der der Vorschub einer Drahtelektrode und die Entladung zum Bearbeiten während des Bearbeitens eines Materials, das zu einem Werkstück auszubilden ist, gestoppt werden, bei der die Drahtelektrode in einem durch die Bearbeitung erzeugten Spalt in einer Richtung senkrecht zu dem Bearbeitungsweg bewegt wird, bis sie in Berührung mit einer Wandung des Materials kommt, und bei der die Länge einer Funkenstrecke aus der Position der Berührung der Drahtelektrode mit der Wandung des Materials erfaßt wird, wobei ein Sollversetzungswert aus der erfaßten Länge der Funkenstrecke und dem vorbekannten Drahtdurchmesser berechnet wird und wobei der Weg der Bearbeitung des Werkstücks automatisch korrigiert wird, so daß das Zentrum der Drahtelektrode bei einer Position liegen kann, die um den Sollversetzungswert relativ zu einem Sollprofil des Werkstücks versetzt ist.

6. Maschine nach Anspruch 5, bei der eine Berechnung des Sollversetzungswertes wie obengenannt in einem Vorbearbeitungsweg vor dem eigentlichen Herausarbeiten des Sollprofils des Werkstücks stattfindet.

7. Maschine nach Anspruch 5 oder 6, bei der das Sollprofil des Werkstücks einen Krümmungsradius hat und bei der eine Berechnung des Sollversetzungswertes wie obengenannt automatisch während des Herausarbeitens des abgerundeten Profils stattfindet.

8. Maschine nach einem der Ansprüche 5 bis 7, bei der die Berechnung mehrmals wiederholt wird, um einen endgültigen Versetzungswert zu bestimmen.

**Revendications**

1. Un procédé d'usinage par électroérosion par fil, dans lequel on arrête l'avance d'une électrode en forme de fil et une décharge pour l'usinage pendant l'usinage d'une matière qui doit former une pièce; on déplace l'électrode en forme de fil dans l'espace usiné, dans une direction perpendiculaire à la trajectoire d'usinage, jusqu'à ce qu'elle vienne en contact avec une paroi de la matière, et on détecte la dimension d'un espace d'éclatement d'étincelle à partir de la position de contact de l'électrode en forme de fil avec la paroi de la matière; on calcule une valeur de décalage désirée à partir de la dimension détectée de l'espace d'éclatement d'étincelle et du diamètre du fil, connu à l'avance; et on corrige la trajectoire d'usinage de la pièce de façon que le centre de l'électrode en forme de fil puisse se trouver à une position décalée de la valeur de décalage désirée, par rapport à un profil désiré de la pièce.

2. Un procédé selon la revendication 1, dans lequel le calcul précité d'une valeur de décalage désirée a lieu dans une trajectoire de pré-usinage, avant l'usinage du profil désiré de la pièce elle-même.

3. Un procédé selon la revendication 1 ou 2, dans lequel un profil désiré de la pièce présente un rayon de courbure et le calcul précité d'une valeur de. décalage désirée a lieu pendant l'usinage du profil ayant un certain rayon.

4. Un procédé selon l'une quelconque des revendications précédentes, dans lequel on répète plusieurs fois le calcul ou chaque calcul pour produire une valeur de décalage finale.

5. Une machine d'usinage par électroérosion par fil, conçue de façon à fonctionner conformément à un procédé d'usinage par électroérosion par fil, dans lequel on arrête l'avance d'une électrode en forme de fil et une décharge pour l'usinage, pendant l'usinage d'une matière qui doit former une pièce; on déplace l'électrode en forme de fil dans l'espace usiné, dans une direction perpendiculaire à la trajectoire d'usinage, jusqu'à ce qu'elle vienne en contact avec une paroi de la matière, et on détecte la dimension de l'espace d'éclatement d'étincelle à partir de la position de contact de l'électrode en forme de fil avec la paroi de la matière; et on calcule une valeur de décalage désirée à partir de la dimension détectée de l'espace d'éclatement d'étincelle et du diamètre du fil, connu à l'avance; et on corrige automatiquement la trajectoire d'usinage de la pièce, de façon que le centre de l'électrode en forme de fil puisse se trouver à une position décalée de la valeur de décalage désirée, par rapport à un profil désiré de la pièce.

6. Une machine selon la revendication 5, dans laquelle le calcul précité d'une valeur de décalage désirée a lieu dans une trajectoire de pré-usinage, avant l'usinage du profil désiré de la pièce elle-même.

7. Une machine selon la revendication 5 ou 6, dans laquelle un profil désiré de la pièce présente un rayon de courbure, et le calcul précité d'une valeur de décalage désirée a lieu automatiquement pendant l'usinage du profil ayant un certain rayon.

8. Une machine selon l'une quelconque des revendications 5 à 7 précédentes, dans laquelle on répète plusieurs fois le calcul pour produire une valeur de décalage finale.

# FIG.1

# FIG.3

# FIG.2

# FIG.4

# FIG.5